Europäisches Patentamt

European Patent Office

Office européen des brevets

(19)

(11) Publication number: **0 169 958**
**A1**

(12) # EUROPEAN PATENT APPLICATION

(21) Application number: **84830236.0**

(22) Date of filing: **03.08.84**

(51) Int. Cl.⁴: **B 01 J 47/10**

(43) Date of publication of application:
**05.02.86 Bulletin 86/6**

(84) Designated Contracting States:
**AT BE CH DE FR GB IT LI NL SE**

(71) Applicant: A.T.A.- APPLICAZIONI TECNOLOGIE
AVANZATE- S.r.l.
Via Alessandro Serpieri 10
I-00197 Roma(IT)

(72) Inventor: Telesforo, Giancarlo Pietro
Via Aurelia, 1100
I-00166 Roma(IT)

(74) Representative: Mascioli, Alessandro, Prof.Dr.
c/o A.N.D.I. Associazione Nazionale degli Inventori Via
Lima, 35
I-00198 Roma(IT)

(54) **Device for the continuous purification of liquids with no interruption in flow.**

(57) Device for the continuous purification of liquids and the regeneration of the ion exchange substances with no interruption in the liquid flow. The liquid is added through tube 10 placed on the bottom in reservoir 2 of column 1, and rises to come into contact with layers of active ion exchange substances, in which undesired ions are deposited. At the same time, with no interruption in the flow of the ion exchange substance, said substance passes through tube 20, valve 21 and pump 7 to the upper cone 8 of reservoir 2, falling by gravity toward the bottom until it reaches the collection area where it is taken up to close the cycle.

EP 0 169 958 A1

./...

**0169958**

## Device for the continuous purification of liquids

## with no interruption in flow

ATA s.r.l.  -  Italy

The invention concerns a device for carrying out a process for continuous purification of liquids, characterized by the fact that all operations involved in the liquid purification and the regeneration of the ione exchange substances used for the purification are performed contemporaneously and continuously, with no interruption of the various flows during operation.

It is known that liquids may be effectively purified from the dissolved ions, replacing the undesired ions like $Ca^{++}$, $Mg^{++}$, $Cl^{-1}$, $SO_4^{--}$, etc., with like $H^+$, $OH^-$, compatible with the final end use of the liquid.

Said substituion is effected with specific natural, such as natural zeolytes, or artificial substances like ion exchange resins, which have the capacity to release their active radical to the liquid and to fix the undesired 'ion.

However, ion exchange substances of all types used for the purification of liquids, periodically exhaust themselves and lose the capacity to adsorb the

0169958

undesired ions.

They must therefore be renewed by means of an operation called regeneration, performed by passing suitable reagents slowly through the ion exchange material in order to restore the active radicals of the ion exchange. Said reagents are normally strong acids (HCl, $H_2SO_4$, $HNO_3$, etc. , strong bases (NaOH, $NH_4OH$) or salts (NaCl, $Na_2SO_4$, etc.).

To this end, in traditional systems, the liquid purification operation is periodically interrupted in order that regeneration may be carried out. When the latter is completed, the purification operation is resumed.

These operations of liquid purification and regeneration take place systematically with intervals of from a few minutes to many hours, depending on the exact case.

As a partial solution toward providing continuous operation, Higghins and Asahi developed systems in which the purification container has a closed circuit of tubing divided into sections by valves (Higghins) or by separate reservoirs placed in succession (Asahi) in which after every period of operation, suitable · operation of the valves causes the resin in the circuit to be replaced with water and washed, so that in several phases it returns to said purification container.

It is evident that the purification cycle of said devices is not continuous and involves considerable dead times, since the washing phases alternate with operational phases.

Moreover, the fact that the ion exchange resins must be mechanically moved and that the valves used are opened and closed frequently lead to the break down of the resin itself. The valves as a consequence have a very short mean lifetime, and so must be replaced.

The aim of this invention is to realize a device which can perform continuously and contemporaneously the purification of liquids and the regeneration of the ion exchange substances, while never interrupting the flow of the liquids and the ion exchangers which occurs during the purification process.

The invention as characterized in the claims resolves the problem of realizing a truly continuous process for the purification of liquids, involving the following phases:

Operation: a flow of liquid is passed thr ugh a layer of ion exchange substance in order to remove undesired ions using the capacity of said substances to fix the undesired ions and replace them with the radicals which form their active group.

Wash: a flow of liquid is passed through a layer of ion exchange material in order to remove any solid substances or fragments of broken ion exchanger which may have become trapped.

Regeneration: a flow of liquid "regenerant" is passed through a layer of exhausted ion exchange material (normally dilute solutions of acids, bases or salts) in order to renew the active groups of the ion exchanger.

Rinse: a flow of liquid is passed through a layer of just regenerated ion exchange material in order to remove all traces of the solution used for the regeneration.

A preferred embodiment of the device for realizing the process described above is shown in the attached drawings showing the schematization of an example.

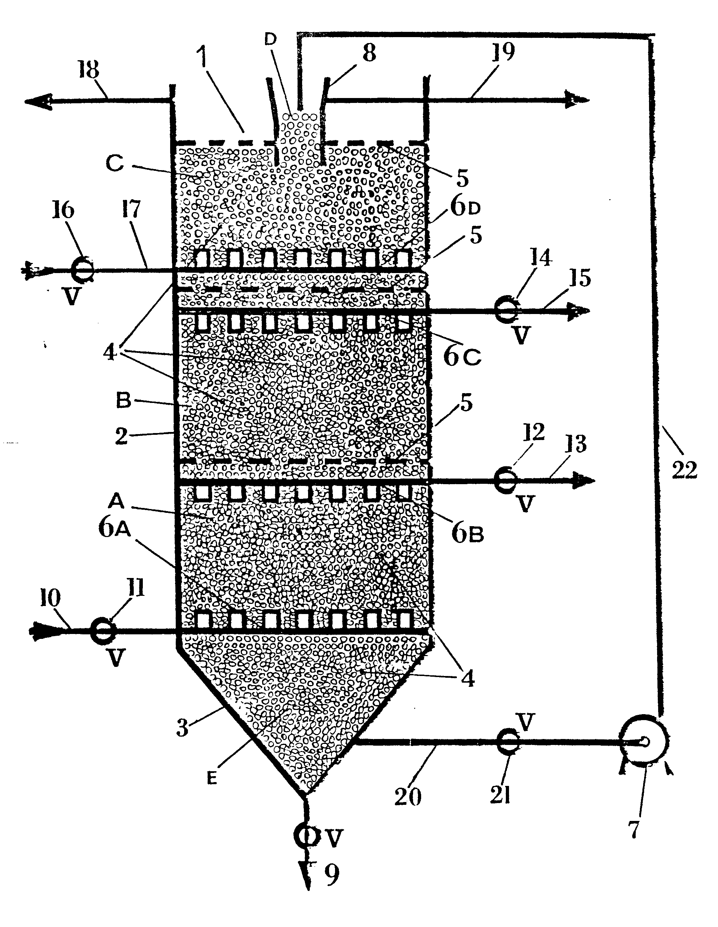

The figure shows a device for the continuous purification of liquids comprising a column 1, realized with a steel treatment receptacle 2 of generally cylindrical shape, possibly covered with anticorrosive substances, stainless steel , plastic material or the like, closed below with a conical or convex bottom 3.

Said receptacle 2 is filled with the ion exchange substance (activated carbon or the like) which can exchange or adsorb the undesired ions present in the liquid to be purified.

Septa 5 are installed on the inside of receptacle 2 in order to prevent expansion of the ion exchange substance which, as the liquid to be purified passes from the bottom to the top, tends to rise and make the bed fluctuate.

The shape of the above septa 5 (comprising for example a grill) and the installation area inside receptacle 2 may be varied as a function of the type of ion exchange material used.

However the principle remains valid that the septum 5 must essentially perform two funcitons: to prevent the ion exchange substance from being carried upward by the liquid and to on the other hand allow the ion exchange substance above the septum itself to flow to the bottom of the receptacle 2.

The septa 5 may be made of plain or covered steel, stainless steel, plastic material or the like.

Distributors 6 of known type are installed inside receptacle 2 with the aim of distributing on or receiving from the mass of ion exchange substance in a uniform fashion the various liquids involved in the entire purification process.

The ion exchange substance which reaches the bottom 3 of the receptacle 2 is in the exhausted form: that is, it has lost the capacity to exchange the ions dissolved in the liquid to be purified by taking up the undesired ions, and so must be regenerated.

Therefore, it is removed from the bottom 3 and sent by a pump 7 to the upper part of the recptacle 2. Said pump may be mechanical, centrifugal, membrane or the like, or may be of the water or air ejector type.

From the upper part, the material comes back into the cycle through the reciver cone 8 and descends toward the bottom, meeting along the way the various flows of liquids which wash, regenerate and rinse it before it comes into contact with the liquid to be purified.

Eventually, bottom 9 may be unloaded through terminal valve V.

To describe the operation of the described device more clearly, two flows may be distinguished in the process:

the first consisting of the liquids and the second of the ion exchange substance, subdividing the receptacle 2 into the following five areas:

A - Operation area, where the liquid to be purified comes into contact with the active ion exchange substance to be purified.

B - Rinse area, where the ion exchange substance is washed with the purified liquid in order to remove all residues of the regeneration solution.

C - Regeneration area, where the exhausted ion exchange substance comes into contact with the regeneration solution to reactivate the active radicals of the ion exchange substance.

D - Wash area, where the ion exchange substance is washed to remove any extraneous substances like, suspensions, muds, or fragments of the substance itself.

E - Collection area, for the exhausted ion exchange substance.

The liquid flow scheme in the invented device may be described as follows: the liquid to be purified enters the operation area A through inlet tube 10, valve 11 and distributor 6A, and rises to meet the layers of active ion exchange substance which will take up the ions, exiting in purified form through the take up distributor 6B, valve 12 and tube 13.

Not all the liquid which enters the operation are comes out tube 13; rather one part, varying as a function of the quantity of ion exchange substance in the cycle, comes into the rinse area B and washes from the ion exchange substance the last traces of regenerating solution, exiting through take up distributor 6C, valve 14 and tube 15.

Not all the rinse liquid comes out the distributor 6C; one part, varying as a function of the quantity of ion exchange substance in the cycle, comes into the regeneration area D to dilute the regeneration solution.

The nature and quantity of the regeneration solution vary as a function of the nature of the purification process, of the type and quantity of ion exchange substance in the cycle, and of the quantity of undesired ions to adsorb from the liquid to be purified. The solution enters the regeneration area D through distributor 6D, valve 16 and tube 17, and comes out from tube 18 after coming into contact with the exhausted ion exchange substance to be regenerated.

Part of the regeneration solution in a quantity which varies as a function of the quantity of ion exchange substance in the cycle, passes through cone 8 to perform the wash operation and comes out tube 12.

With regard to the flow scheme of the ion exchange substance, the amount which is in the exhausted state and is collected in area E arrives through tube 20, valve 21 and pump 7 and is sent to the upper part of the reservoir 2 through tube 22 and cone 8.

Due to its own weight, the substance descends toward the bottom of the reservoir 2, coming into contact with the various flows which participate in the purification process, and returns to the collection area E, from where it is taken up to repeat the cycle described.

Of course, while the principle of the finding remains the same, the forms of realization , the dimensions, and the materials used may be varied widely, while staying within the bounds of the present invention.

## Claims

1. Device for the continuous purification of liquids characterized by the fact that the phases of operation, rinsing, regeneration, and washing which occur in the purification of liquids and the regeneration of the ion exchange substances used for the purification, occur contemporaneously and continuously in the respective areas A, B, C and D, with a final collection area E for the exhausted ion exchange substance, with no interruption in the flow of liquids or of ion exchange substance.

2. Device for the purification of liquids according to claim 1 characterized by the fact that the liquid to be purified is placed in the reservoir 2 of column 1 through tube 10 on the bottom, and rising toward the top comes into contact with the layers of active ion exchange substance which will take up the undesired ions and then exits through the up take distributor 6B, valve 12 and tube 13 while contemporaneously the ion exchange substance is sent into the upper cone 8 of the reservoir 2 and falls by gravity toward the bottom, to arrive in the collection area E from where it is taken up to repeat the cycle through tube 20, valve 21 and pump 7.

0169958

3. Device for the purification of liquids according
   to claim 1 characterized by the fact that a part
   of the liquid which comes into the operation area A,
   varying as a function of the quantity of ion
   exchange substance in the cycle, does not come out
   the tube 13, comes into the rinse area B and washes
   from the ion exchange substance the last trances
   of regenerating solution exiting through take up
   distributor 6C, valve 14 and tube 15.

4. Device for the purification of liquids according
   to claim 1 characterized by the fact that a part
   of the liquid which is used for rinsing does not
   come out from distributor 6C but, varying as a function
   of the quantity of ion exchange substance in the
   cycle, comes into the regeneration area D to dilute
   the regeneration solution.

5. Device for the purification of liquids according
   to claim 1 characterized by the fact that the
   regeneration solution enters the regeneration area D
   through distributor 6D, valve 16 and tube 17,
   and comes out from tube 18 after coming into contact
   with the exhausted ion exchange substance to be
   regenerated.

6. Device for the purification of liquids according
   to claim 1 characterized by the fact that part of the regeneration solution passes through cone 8
to perform the wash operation and comes out tube 19.

7. Device for the purification of liquids according
to claim 1 characterized by the presence of septa 5
to prevent the ion exchange substances from being
carried upward by the rising liquids and to allow
said substances to descend.

8. Device for the purification of liquids according
to claim 1 characterized by the fact that for the
operations of rinsing and regeneration of the ion
exchange substances it uses a fraction of the
purified liquid, taken from inside the purification
column 1, while the purification of the liquid
itself takes place contenporaneously.

9. Device for the purification of liquids according
to claim 1 characterized by the fact that it
takes the exhausted ion exchange substance from
the bottom of the purification column 1 and
recycles it on top of the column while the operations
of liquid purification and ion exchange substance
regeneration take place contemporaneously.

**European Patent Office**

**EUROPEAN SEARCH REPORT**

## DOCUMENTS CONSIDERED TO BE RELEVANT

| Category | Citation of document with indication where appropriate, of relevant passages | Relevant to claim | CLASSIFICATION OF THE APPLICATION (Int. Cl 4) |
|---|---|---|---|
| X | DE-A-1 907 151 (CHARTERS) <br><br> * Page 9, paragraph 3 - page 11, paragraph 2; page 17 * | 1-5,8, 9 | B 01 J 47/10 |
| A | US-A-3 019 079 (DONOHUE) <br><br> * Column 6, line 23 - column 10, line 72 * | 1,2,7, 9 | |
| A | DE-B-1 025 386 (METALLGESELLSCHAFT) <br> * Column 2, line 53 - column 3, line 68 * | 1-9 | |
| X | US-A-2 852 464 (NORDELL) <br> * Column 3, line 65 - column 5, line 10 * | 1-9 | TECHNICAL FIELDS SEARCHED (Int. Cl.4) <br><br> B 01 J |

The present search report has been drawn up for all claims

| Place of search THE HAGUE | Date of completion of the search 22-03-1985 | Examiner WENDLING J.P. |
|---|---|---|

EPO Form 1503 03.82